(19) Europäisches Patentamt European Patent Office Office européen des brevets

(11) **EP 4 645 577 A1**

(12) **EUROPEAN PATENT APPLICATION**
published in accordance with Art. 153(4) EPC

(43) Date of publication:
05.11.2025 Bulletin 2025/45

(21) Application number: 22969746.1

(22) Date of filing: 30.12.2022

(51) International Patent Classification (IPC):
*H01M 50/531* (2021.01)     *H01M 4/13* (2010.01)
*H01M 10/0525* (2010.01)

(52) Cooperative Patent Classification (CPC):
H01M 4/13; H01M 10/0525; H01M 50/531;
Y02E 60/10

(86) International application number:
PCT/CN2022/143811

(87) International publication number:
WO 2024/138601 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Ningde Amperex Technology Limited
Ningde, Fujian 352100 (CN)
(72) Inventors:
• ZENG, Qiao
Ningde, Fujian 352100 (CN)
• WANG, Jinli
Ningde, Fujian 352100 (CN)
• YAN, Dongyang
Ningde, Fujian 352100 (CN)

(74) Representative: **Icosa**
**83 avenue Denfert-Rochereau**
**75014 Paris (FR)**

(54) **ELECTROCHEMICAL DEVICE AND ELECTRONIC DEVICE**

(57)    An electrochemical device includes a housing, an electrode assembly, and a first conductive plate. The electrode assembly includes a first electrode plate. The first electrode plate includes a first current collector, a first conductive material layer provided with a first opening, and a second conductive material layer provided with a second opening. The first current collector includes a first surface and a second surface. The first surface includes a first region. The second surface includes a second region. When viewed from the first direction, the first region overlaps with the second region, and the first conductive plate is connected to the first region or the second region. The first opening includes first to third opening edges. The second opening includes fourth to sixth opening edges. A distance between the first opening edge and the fourth opening edge is a first distance. A distance between the second opening edge and the fifth opening edge is a second distance. A distance between the third opening edge and the sixth opening edge is a third distance. the electrochemical device satisfies at least one of the following conditions: 0.2 mm≤first distance; 2 mm≤second distance; or 0.2 mm≤third distance, so as to improve the reliability and extend the service life. An electronic device is further provided.

FIG. 5

## Description

### TECHNICAL FIELD

This application relates to the field of energy storage technologies, and in particular, to an electrochemical device and an electronic device including such electrochemical device.

### BACKGROUND

Electrochemical devices (for example, batteries) are widely used in electronic products such as electronic mobile equipment, electric tools, and electric vehicles. An electrochemical device typically includes an electrode plate, a separator, and a conductive plate. A conductive material layer of the electrode plate is provided with an opening to expose a portion of a surface of a current collector. The conductive plate is connected to the portion of the surface.

However, during a calendering process of the electrode plate, the damage such as wrinkles of the current collector may occur, leading to poor appearance and poor internal interface of the electrochemical device. Moreover, when the electrochemical device is dropped, the current collector may fracture due to the pulling by the conductive plate, leading to reduced reliability and service life of the electrochemical device.

### SUMMARY

Therefore, this application proposes an electrochemical device capable of reducing the possibility of wrinkles, fractures, and the like of a current collector.

In addition, this application further provides an electronic device including such electrochemical device.

A first aspect of this application provides an electrochemical device including a housing, an electrode assembly, and a first conductive plate. The electrode assembly is located in the housing and includes a first electrode plate. The first electrode plate includes a first current collector, a first conductive material layer, and a second conductive material layer. The first current collector includes a first surface and a second surface facing opposite directions. The first conductive material layer is disposed on the first surface. The second conductive material layer is disposed on the second surface. The first conductive material layer is provided with a first opening. The first surface includes a first region. The first region is a region of the first surface exposed at the first opening. The second conductive material layer is provided with a second opening. The second surface includes a second region. The second region is a region of the second surface exposed at the second opening. When viewed from a first direction perpendicular to the first region, the first region has an overlapping portion with the second region; and the first conductive plate is connected to the first region or the second region and extends out of the housing. When viewed from the first direction, the first opening includes a first opening edge and a second opening edge opposite each other in a second direction perpendicular to the first direction, and a third opening edge connected to both the first opening edge and the second opening edge. When viewed from the first direction, the second opening includes a fourth opening edge and a fifth opening edge opposite each other in the second direction, and a sixth opening edge connected to both the fourth opening edge and the fifth opening edge. When viewed from the first direction, the first opening edge and the fourth opening edge are located on a first side of the first conductive plate, the second opening edge and the fifth opening edge are located on a second side of the first conductive plate opposite the first side, and the third opening edge and the sixth opening edge are located on a third side of the first conductive plate. A distance between the first opening edge and the fourth opening edge in the second direction is a first distance; a distance between the second opening edge and the fifth opening edge in the second direction is a second distance; and a distance between the third opening edge and the sixth opening edge in a third direction perpendicular to both the first direction and the second direction is a third distance; and the electrochemical device satisfies at least one of the following conditions: 0.2 mm≤first distance; 2 mm≤second distance; or 0.2 mm≤third distance.

In this application, a distance between the opening edges located on the same side of the first conductive plate is set to fall within a predetermined range. In this way, when the electrochemical device is subjected to mechanical abuse and the electrode assembly moves in the housing to cause the first conductive plate to pull the first current collector, the possibility of tearing induced by sudden thickness changes near the exposed edges of the first current collector may be reduced, thereby reducing the possibility of the first conductive plate detaching from the first current collector and leading to a decrease in the output voltage of the electrochemical device or even incapability of charging and discharging. Therefore, the reliability and service life of the electrochemical device are improved. Moreover, the opening edges located on the same side of the first conductive plate is conducive to providing a good buffering effect during the calendering process of the electrode plate. This reduces the possibility of damage such as wrinkles caused by a sudden increase in pressure on the exposed first current collector during calendering of the electrode plate, thereby reducing the possibility of poor appearance or poor internal interface of the electrochemical device, and reducing the possibility of inconvenient connection of the first conductive plate or the influence on the capacity of the electrochemical device when the above distances are large.

In some possible implementations, the electrochemical device satisfies at least one of the following conditions: 0.2 mm≤first distance≤4 mm; 2 mm≤second distance≤4 mm; or 0.2 mm≤third distance≤4 mm. This is conducive to reducing the possibility of damage to the first current collector during calendering or mechanical abuse, and is also conducive to reducing the possibility of inconvenient connection of the first conductive plate or the influence on the capacity of the electrochemical device when the above distances are large.

In some possible implementations, 0.5 mm≤first distance≤3 mm, 0.5 mm≤$L_2$≤3 mm, or 0.5 mm≤$L_3$≤3 mm. Therefore, this may further reduce the possibility of damage to the first current collector during calendering or mechanical abuse, and may also further reduce the possibility of inconvenient connection of the first conductive plate or the influence on the capacity of the electrochemical device when the above distances are large.

In some possible implementations, 0.5 mm≤first distance≤2 mm, 0.5 mm≤$L_2$≤2 mm, or 0.5 mm≤$L_3$≤2 mm. Therefore, this may further reduce the possibility of damage to the first current collector during calendering or mechanical abuse, and may also further reduce the possibility of inconvenient connection of the first conductive plate or the influence on the capacity of the electrochemical device when the above distances are large.

In some possible implementations, 1 mm≤first distance≤2 mm, 1 mm≤$L_2$≤2 mm, or 1 mm≤$L_3$≤2 mm. Therefore, this may further reduce the possibility of damage to the first current collector during calendering or mechanical abuse, and may also further reduce the possibility of inconvenient connection of the first conductive plate or the influence on the capacity of the electrochemical device when the above distances are large.

In some possible implementations, when viewed from the first direction, the second region covers the first region. When the first conductive plate is connected to the first region, welding marks may completely fall within a range of the second region. This reduces the possibility of the welding marks falling on the second conductive material layer in a thickness transition region and leading to detachment of a conductive material and short circuits, thereby improving the reliability and service life of the electrochemical device. In addition, the thickness of a welding position is also reduced, thereby reducing the influence on the energy density of the electrochemical device.

In some possible implementations, a distance between the first opening edge and the second opening edge in the second direction is a fourth distance; a distance between the fourth opening edge and the fifth opening edge in the second direction is a fifth distance; and the fourth distance is less than the fifth distance. Therefore, this may reduce the possibility of damage to the first current collector during calendering or mechanical abuse. Moreover, this also further reduces the possibility of the welding marks falling on the second conductive material layer in the thickness transition region and leading to detachment of the conductive material and short circuits.

In some possible implementations, 0.8 mm≤fifth distance-fourth distance≤6 mm. Therefore, this may reduce the possibility of damage to the first current collector during calendering or mechanical abuse, and may also reduce the possibility of inconvenient connection of the first conductive plate or the influence on the capacity of the electrochemical device when the above distances are large.

In some possible implementations, when viewed from the first direction, the first electrode plate includes a first end edge and a second end edge opposite each other in the third direction. The first electrode plate is provided with a recess at the first end edge. When viewed from the first direction, the recess connects to the first region, and the first conductive plate covers a portion of the recess.

In some possible implementations, when viewed from the first direction, the first opening further includes a seventh opening edge connecting the first opening edge and the recess, and the seventh opening edge also connects the second opening edge and the recess. A portion of the first conductive material layer is located between the seventh opening edge and the first end edge. When viewed from the first direction, the second opening further includes an eighth opening edge connecting the fourth opening edge and the recess, and the eighth opening edge also connects the fifth opening edge and the recess. The eighth opening edge overlaps with the first end edge. Due to the recess, the thickness of the first electrode plate at this position is reduced, and the portion of the first conductive material layer located between the seventh opening edge and the first end edge can act as a thickness compensation, thereby making the overall thickness of the electrochemical device more uniform. In addition, when the electrode plate is slit, the thickness at the slit edge is uniform, which is conducive to reducing the possibility of formation of wavy edges at the slit edge.

In some possible implementations, when viewed from the first direction, a distance between the seventh opening edge and the eighth opening edge in the third direction is a sixth distance, and 0.2 mm≤sixth distance≤4 mm. Setting the distance between the seventh opening edge and the eighth opening edge may reduce the possibility of damage to the first current collector during calendering or mechanical abuse. Meanwhile, this may also reduce the possibility of inconvenient connection of the first conductive plate or the influence on the capacity of the electrochemical device when the above ranges are large.

In some possible implementations, a distance between the third opening edge and the seventh opening edge in the third direction is a seventh distance, and a distance between the sixth opening edge and the eighth opening edge in the third direction is an eighth distance, where the seventh distance is less than the eighth distance. Thus, this may reduce the possibility of damage to the first current collector during calendering or mechanical abuse.

In some possible implementations, 0.8 mm≤eighth distance-seventh distance≤6 mm. Therefore, this may reduce the possibility of damage to the first current collector during calendering or mechanical abuse, and may also reduce the possibility of inconvenient connection of the first conductive plate or the influence on the capacity of the electrochemical device when the above ranges are large.

In some possible implementations, when viewed from the first direction, the first opening further includes a seventh opening edge connecting the first opening edge and the recess, and the seventh opening edge also connects the second opening edge and the recess. A portion of the first conductive material layer is located between the seventh opening edge and the first end edge. When viewed from the first direction, the second opening further includes an eighth opening edge connecting the fourth opening edge and the recess, and the eighth opening edge also connects the fifth opening edge and the recess. A portion of the second conductive material layer is disposed between the eighth opening edge and the first end edge. Due to the recess, the thickness of the first electrode plate at that position is reduced, and the portion of the second conductive material layer located between the eighth opening edge and the first end edge may also provide thickness compensation, making the overall thickness of the electrochemical device more uniform. In addition, when the electrode plate is slit, the thickness at the slit edge is uniform, which is conducive to reducing the possibility of formation of wavy edges at the slit edge.

In some possible implementations, a distance between the third opening edge and the seventh opening edge in the third direction is a seventh distance, and a distance between the sixth opening edge and the eighth opening edge in the third direction is an eighth distance, where the seventh distance is less than the eighth distance. Thus, this may reduce the possibility of damage to the first current collector during calendering or mechanical abuse.

In some possible implementations, 0.4 mm≤eighth distance-seventh distance≤6 mm. Therefore, this may reduce the possibility of damage to the first current collector during calendering or mechanical abuse, and may also reduce the possibility of inconvenient connection of the first conductive plate or the influence on the capacity of the electrochemical device when the above ranges are large.

In some possible implementations, the first conductive plate is connected to the first region. Thus, welding marks may completely fall within a range of the second region. This reduces the possibility of the welding marks falling on the second conductive material layer in a thickness transition region and leading to detachment of a conductive material and short circuits, thereby improving the reliability and service life of the electrochemical device. In addition, the thickness of a welding position is also reduced, thereby reducing the influence on the energy density of the electrochemical device.

In some possible implementations, the first conductive plate includes a first conductive region having an overlapping portion with the first region when viewed from the first direction. The first conductive region includes a connection region, and the first conductive region is connected to the first region through the connection region.

In some possible implementations, an area of the connection region is $S_1$, an area of the first region is $S_2$, and $S_1<S_2$. Thus, this may reduce the possibility of increased welding difficulty when the connection region is large.

In some possible implementations, 25%≤$S_1/S_2$≤50%. Thus, this may improve the connection strength between the connection region and the first region, and further reduce the possibility of increased welding difficulty when the connection region is large.

In some possible implementations, 35%≤$S_1/S_2$≤50%. Thus, this may further improve the connection strength between the connection region and the first region.

In some possible implementations, an area of the connection region is $S_1$; the connection region includes a plurality of welding spots; a sum of areas of projections of the plurality of welding spots in the first direction is $S_3$; and $S_3<S_1$. Thus, this reduces the possibility of overwelding when the proportion of the area of the welding spot is large.

In some possible implementations, 25%≤$S_3/S_1$≤80%. Thus, this further reduces the possibility of overwelding when the proportion of the area of the welding spot is large, also reduces the possibility of insufficient welding when the proportion of the area of the welding spot is small, improves the connection strength between the connection region and the first region, and reduces the possibility of the first conductive plate falling off during mechanical abuse.

In some possible implementations, the housing includes a body portion and a connection portion connected to the body portion. The electrode assembly is disposed in the body portion. The first conductive plate further includes a second conductive region and a third conductive region connected to both the first conductive region and the second conductive region. The second conductive region is disposed in the connection portion and extends out of the housing. A portion of the third conductive region extends along a direction from the first region to the second region. Thus, when the electrochemical device is subjected to mechanical abuse, since the extension direction of the portion of the third conductive region coincides with a force direction of the first conductive region, the third conductive region may provide a large buffer space, reducing pulling on the connection region of the first conductive region, thereby reducing the possibility of the first conductive plate detaching from the first current collector and leading to a decrease in the output voltage of the electrochemical device or even incapability of charging and discharging, and improving the reliability and service life of the electrochemical device.

In some possible implementations, the first conductive plate is welded to the first region, thereby improving the connection strength between the first conductive plate and the first region.

In some possible implementations, the electrochemical device further includes a first layer containing an insulating material. The first layer is adhered to the first region. The first conductive plate is disposed between the first region and the first layer. The first layer is used to cover welding marks on the first conductive plate, thereby reducing the risk of the welding marks piercing a separator.

In some possible implementations, when viewed from the first direction, the first layer covers the first region. Thus, this allows for strong adhesion of the first layer, reducing the possibility of detachment of the first layer.

In some possible implementations, the first layer includes a first edge and a second edge opposite each other in the second direction, and a third edge connecting the first edge and the second edge. The first edge is located on the first side of the first conductive plate, the second edge is located on the second side of the first conductive plate, and the third edge is located on the third side of the first conductive plate. When viewed from the first direction, a distance between the first edge and the first opening edge in the second direction is a ninth distance, a distance between the second edge and the second opening edge in the second direction is a tenth distance, and a distance between the third edge and the third opening edge in the third direction is an eleventh distance, where 0.5 mm≤ninth distance≤8 mm, 0.5 mm≤tenth distance≤8 mm, and 0.5 mm≤eleventh distance≤8 mm. Thus, this allows for strong adhesion of the first layer, reducing the possibility of detachment of the first layer. In addition, this also reduces the possibility of increased area of the first conductive material layer covered by the first layer and reduced energy density when the ninth distance, the tenth distance, or the eleventh distance is large.

In some possible implementations, the electrode assembly is of a wound structure.

In some possible implementations, the first electrode plate is a positive electrode plate, and the first current collector is an aluminum foil. The positive electrode plate has a high compacted density, so that the positive electrode current collector is significantly calendered during a calendering process of the positive electrode plate. Therefore, this application significantly reduces the possibility of damage such as wrinkles caused by a sudden increase in pressure on the exposed first current collector during calendering of the electrode plate.

This application further provides an electronic device including the foregoing electrochemical device. The electronic device is powered by the above electrochemical device, and the electrochemical device has high reliability and long service life.

## BRIEF DESCRIPTION OF DRAWINGS

FIG. 1 is a schematic structural diagram of an electrochemical device according to an embodiment of this application.

FIG. 2 is a cross-sectional view along II-II of the electrochemical device shown in FIG. 1.

FIG. 3 is a cross-sectional view along III-III of the electrochemical device shown in FIG. 1.

FIG. 4 is a schematic structural diagram of the electrochemical device shown in FIG. 1 before sealing.

FIG. 5 is a schematic diagram of a partial structure of a first electrode plate of the electrochemical device shown in FIG. 2 when viewed from a first direction.

FIG. 6 is a schematic structural diagram of the first electrode plate in FIG. 5 after removal of a first layer.

FIG. 7 is a schematic diagram of a partial structure of the back of the first electrode plate shown in FIG. 5.

FIG. 8 is a schematic structural diagram of the first electrode plate in FIG. 7 after removal of a second layer.

FIG. 9 is a cross-sectional view along IX-IX of the first electrode plate shown in FIG. 5 according to some embodiments.

FIG. 10 is a cross-sectional view along IX-IX of the first electrode plate in FIG. 5 according to some other embodiments.

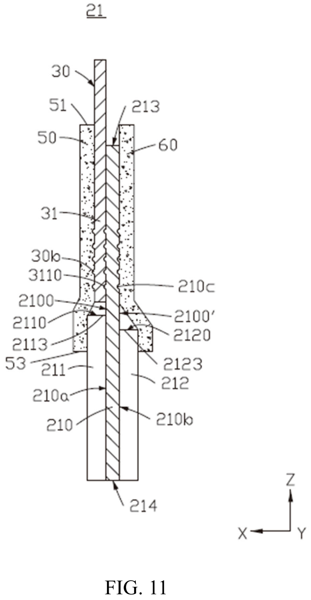

FIG. 11 is a cross-sectional view along XI-XI of the first electrode plate shown in FIG. 5 according to some embodiments.

FIG. 12 is a cross-sectional view of a first electrode plate of an electrochemical device according to another embodiment of this application.

FIG. 13 is a schematic diagram of a partial structure of a first electrode plate of an electrochemical device according to still another embodiment of this application when viewed from a first direction.

FIG. 14 is a cross-sectional view along W1-W1 of the first electrode plate shown in FIG. 13.

FIG. 15 is a schematic diagram of a partial structure of a first electrode plate of an electrochemical device according to yet still another embodiment of this application when viewed from a first direction.

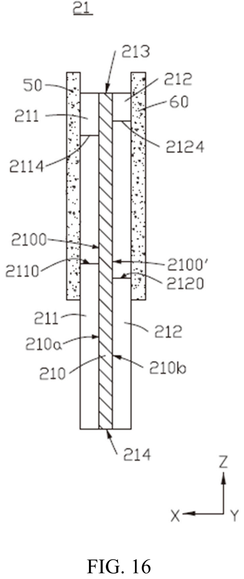

FIG. 16 is a cross-sectional view along W2-W2 of the first electrode plate shown in FIG. 15.

FIG. 17 is a schematic diagram of an overall structure of an electronic device according to an embodiment of this application.

This application is further described in the following specific embodiments with reference to the accompanying drawings.

## DETAILED DESCRIPTION

The following describes the technical solutions in some embodiments of this application clearly and in detail. Apparently, the described embodiments are only some rather than all of these embodiments of this application. Unless otherwise defined, all technical and scientific terms used herein shall have the same meanings as commonly understood by persons skilled in the art to which this application belongs. The terms used in the specification of this application are merely intended to describe specific embodiments rather than to limit this application.

The following describes some embodiments of this application in detail. However, this application may be embodied in many different implementations and should not be construed as being limited to some illustrative embodiments described herein. Rather, these illustrative embodiments are provided such that this application can be conveyed to persons skilled in the art thoroughly and in detail.

In addition, in the accompanying drawings, sizes or thicknesses of various components and layers may be exaggerated for brevity and clarity. Throughout the text, the same numerical values represent the same elements. As used herein, the term "and/or" includes any and all combinations of one or more associated items listed. In addition, it should be understood that when an element A is referred to as being "connected to" an element B, the element A may be directly connected to the element B, or an intervening element C may be present therebetween such that the element A and the element B are indirectly connected to each other.

Further, "may" used when describing some embodiments of this application relates to "one or more embodiments of this application".

The technical terms used herein are merely intended to describe specific embodiments rather than to limit this application. As used herein, the singular forms are intended to include the plural forms as well, unless otherwise clearly indicated in the context. It should be further understood that the term "include" used in this specification indicates the presence of stated features, numerical values, steps, operations, elements, and/or components but does not preclude the presence or addition of one or more other features, numerical values, steps, operations, elements, components, and/or combinations thereof.

Spatial related terms such as "above" may be used herein for ease of description to describe the relationship between one element or feature and another element (a plurality of elements) or feature (a plurality of features) as illustrated in the figure. It should be understood that the spatial related terms are intended to include different directions of equipment or a device in use or operation in addition to the directions described in the figures. For example, if the equipment in the figures is turned over, elements described as being "above" or "over" other elements or features would then be oriented "below" or "beneath" the other elements or features. Thus, the example term "above" may include both the orientations above and below. It should be understood that although the terms such as first, second, and third may be used herein to describe various elements, components, regions, layers, and/or parts, these elements, components, regions, layers, and/or parts should not be limited by these terms. These terms are used to distinguish one element, component, region, layer, or portion from another element, component, region, layer, or portion. Therefore, the first element, component, region, layer, or portion discussed below may be referred to as the second element, component, region, layer, or portion without departing from the teachings of the illustrative embodiments.

In this application, design relationships between parameter values that are greater than, less than, or not equal to each other need to exclude the reasonable errors of measurement equipment.

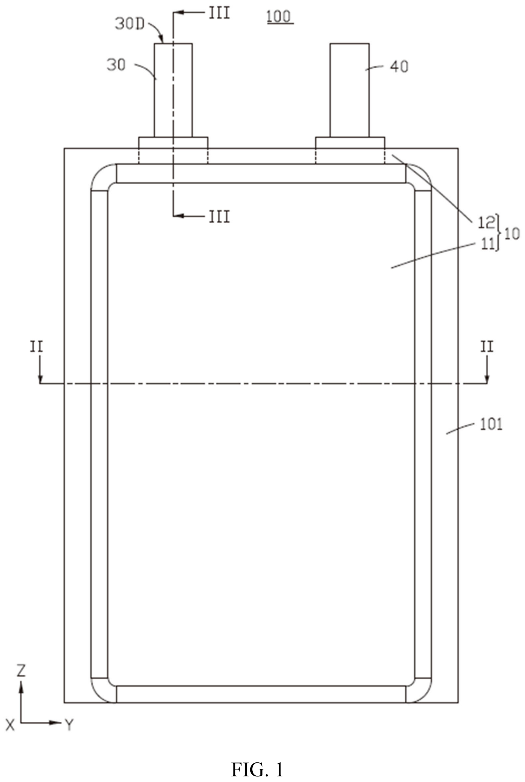

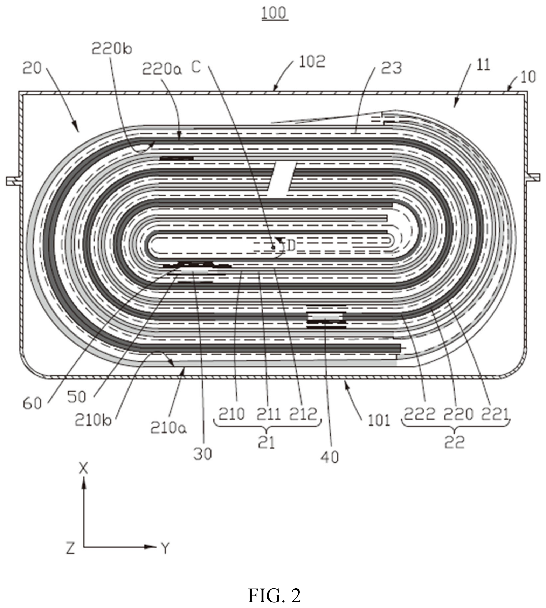

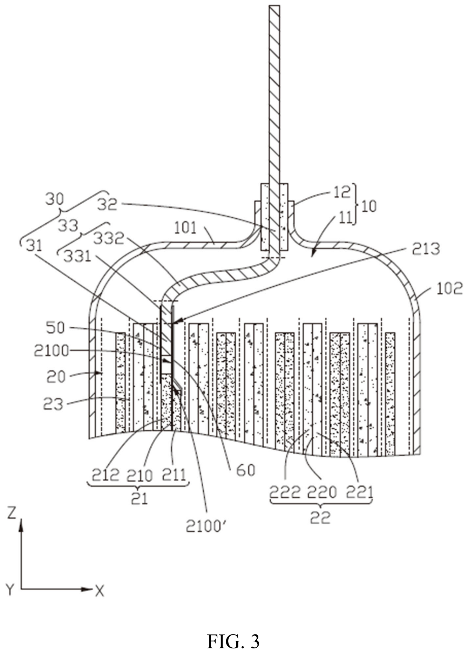

Referring to FIGs. 1 to 3, an embodiment of this application provides an electrochemical device 100 including a housing 10, an electrode assembly 20, a first conductive plate 30, and a second conductive plate 40. The electrode assembly 20 is disposed in the housing 10. The first conductive plate 30 and the second conductive plate 40 are both electrically connected to the electrode assembly 20 and extend out of the housing 10 from inside the housing 10 to be connected to an external component (not shown in the figure). As shown in FIGs. 2 and 3, one electrode assembly 20 is provided. In another embodiment, a plurality of electrode assemblies 20 may alternatively be provided, and the plurality of electrode assemblies 20 are located in the housing 10 and electrically connected in parallel or in series.

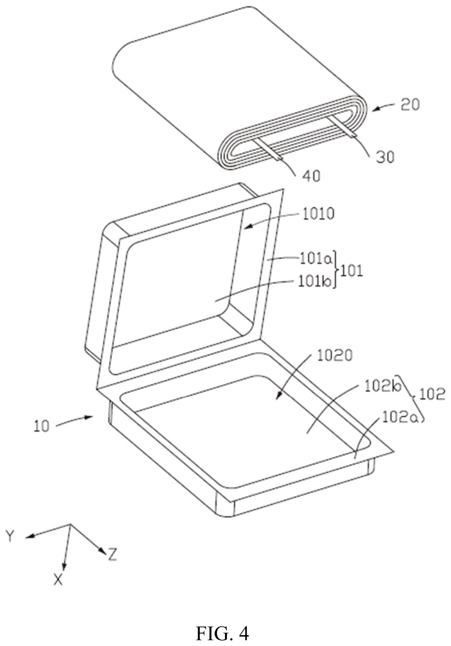

Referring to FIG. 4, in some embodiments, the housing 10 may be a packaging bag obtained by sealing with a sealing film (such as an aluminum-plastic film), meaning that the electrochemical device 100 may be a soft pack battery. The housing 10 includes a first housing 101 and a second housing 102 opposite each other. The first housing 101 includes a first portion 101a and a second portion 101b connected to each other. The second portion 101b is provided with a first recess 1010. The second housing 102 includes a third portion 102a and a fourth portion 102b connected to each other. The fourth portion 102b is provided with a second recess 1020. Referring to FIGs. 1, 3, and 4, the housing 10 includes a body portion 11 and a connection portion 12. The second portion 101b of the first housing 101 and the fourth portion 102b of the second housing 102 are connected to form the body portion 11. The electrode assembly 20 is disposed in the body portion 11. The first portion 101a of the first housing 101 and the third portion 102a of the second housing 102 are connected to form the connection portion 12. The connection portion 12 is used for sealing the body portion 11. The connection portion 12 is a sealing edge formed by packaging the first portion 101a and the third portion 102a. Both the first conductive plate 30 and the second conductive plate 40 are clamped in the connection portion 12 and extend out of the housing 10 from an edge of the connection portion 12. In some other embodiments, the second housing 102 may alternatively be of a flat structure. After the first housing 101 and the second housing 102 are sealed, the first recess 1010 is sealed by the fourth portion 102b of the second housing 102 to form the body portion 11. In some other embodiments, the electrochemical device 100 is not limited to a soft pack battery and may alternatively be a steel-shell battery, an aluminum-shell battery, or the like.

As shown in FIG. 2, the electrode assembly 20 may be of a wound structure. The electrode assembly 20 includes a first electrode plate 21, a second electrode plate 22, and a separator 23, where the separator 23 is disposed between the first electrode plate 21 and the second electrode plate 22. The first electrode plate 21, the separator 23, and the second electrode plate 22 are stacked sequentially and then wound to form the electrode assembly 20. As shown in FIG. 2, the electrode assembly 20 has a winding central axis C perpendicular to the plane of the paper. A winding direction D is a direction rotating counterclockwise around the winding central axis C in FIG. 2. In some other embodiments, the winding direction D may alternatively be a clockwise rotation direction. In this application, a three-dimensional coordinate system is established based on a first direction X, a second direction Y, and a third direction Z perpendicular to each other. The first direction X is a direction perpendicular to one surface of the first conductive plate 30. The second direction Y is a direction from the first conductive plate 30 to the second conductive plate 40 and may alternatively be a direction of the winding central axis C. The third direction Z is a direction along which the first conductive plate 30 protrudes from the electrode assembly 20. In some other embodiments, the electrode assembly 20 may alternatively be of a laminated structure.

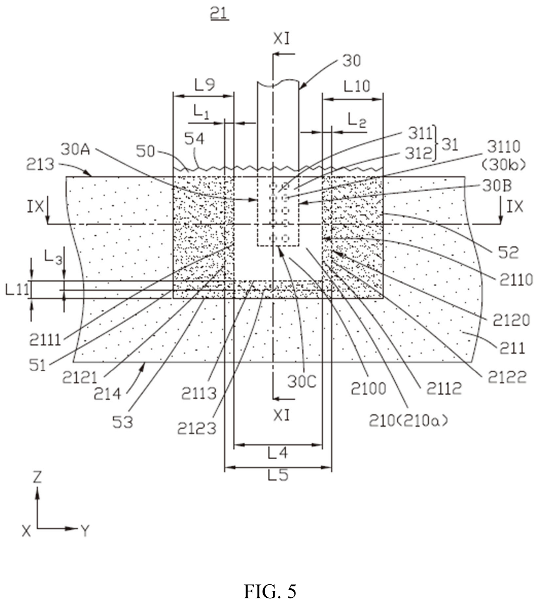

Referring to FIG. 5, when viewed from the first direction X, the first electrode plate 21 includes a first end edge 213 and a second end edge 214 opposite to each other in the third direction Z. The first end edge 213 and the second end edge 214 may both extend along the second direction Y. Referring to FIG. 2, the first electrode plate 21 includes a first current collector 210, a first conductive material layer 211, and a second conductive material layer 212. The first current collector 210 includes a first surface 210a and a second surface 210b facing opposite directions. The first conductive material layer 211 is disposed on the first surface 210a, and the second conductive material layer 212 is disposed on the second surface 210b. The second electrode plate 22 includes a second current collector 220, a third conductive material layer 221, and a fourth conductive material layer 222. The second current collector 220 includes a third surface 220a and a fourth surface 220b opposite to each other. The third conductive material layer 221 is disposed on the third surface 220a, and the fourth conductive material layer 222 is disposed on the fourth surface 220b. The second conductive material layer 212 and the fourth conductive material layer 222 face each other across the separator 23. In some embodiments, after stacked and laminated, the first surface 210a of the first current collector 210 is farther from the winding central axis C than the second surface 210b, and the third surface 220a of the second current collector 220 is farther from the winding central axis C than the fourth surface 220b. It can be understood that in another embodiment, the first surface 210a of the first current collector 210 may alternatively be closer to the winding central axis C, and the third surface 220a of the second current collector 220 may alternatively be closer to the winding central axis C than the fourth surface 220b.

The first electrode plate 21 may be a positive electrode plate or a negative electrode plate. Correspondingly, the first current collector 210 may be a positive electrode current collector or a negative electrode current collector. The first conductive material layer 211 and the second conductive material layer 212 may each be a positive electrode active material layer or a negative electrode active material layer. The second electrode plate 22 may be a negative electrode plate or a positive electrode plate. Correspondingly, the second current collector 220 may be a negative electrode current collector or a positive electrode current collector. The third conductive material layer 221 and the fourth conductive material layer 222 may each be a negative electrode active material layer or a positive electrode active material layer. In some embodiments, the first electrode plate 21 is a positive electrode plate, and the second electrode plate 22 is a negative electrode plate. The positive electrode current collector may be an aluminum foil or a nickel foil, and the negative electrode current collector may be at least one of a copper foil, a nickel foil, or a carbon-based current collector.

The positive electrode active material layer contains a positive electrode active material, and the positive electrode active material includes a compound that can reversibly intercalate and deintercalate lithium ions (that is, a lithium intercalation compound). In some embodiments, the positive electrode active material may include a lithium transition metal composite oxide. The lithium transition metal composite oxide contains lithium and at least one element selected from cobalt, manganese, and nickel. In some embodiments, the positive electrode active material is at least one selected from lithium cobaltate ($LiCoO_2$), a lithium nickel manganese cobalt ternary material (NCM), lithium manganate ($LiMn_2O_4$), lithium nickel manganate ($LiNi_{0.5}Mn_{1.5}O_4$), or lithium iron phosphate ($LiFePO_4$).

The negative electrode active material layer contains a negative electrode active material, and the negative electrode active material is a negative electrode active material known in the art that can reversibly intercalate and deintercalate active ions. This is not limited in this application. For example, the negative electrode active material includes but is not limited to one or a combination of several selected from graphite, soft carbon, hard carbon, carbon fiber, mesocarbon microbeads, a silicon-based material, a tin-based material, lithium titanate, or another metal capable of forming an alloy with lithium. The graphite may be one or a combination of several selected from artificial graphite, natural graphite, and modified graphite. The silicon-based material may be one or a combination of several selected from elemental silicon, a silicon-oxygen compound, a silicon-carbon composite, and a silicon alloy. The tin-based material may be one or a combination of several selected from elemental tin, a tin-oxygen compound, and a tin alloy.

The separator 23 includes at least one of polyethylene, polypropylene, polyvinylidene fluoride, polyethylene glycol terephthalate, polyimide, or aramid. For example, polyethylene is at least one selected from high-density polyethylene, low-density polyethylene, or ultrahigh-molecular-weight polyethylene. Polyethylene and polypropylene have a good effect on alleviating short circuits and may improve the stability of the electrochemical device through the turn-off effect.

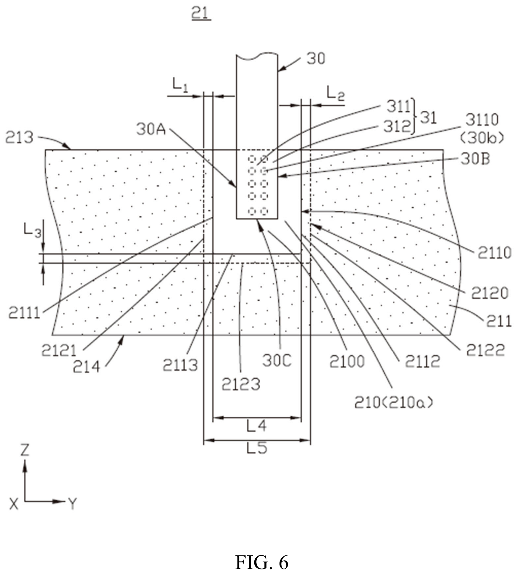

Referring to FIGs. 5 and 6, the first conductive material layer 211 is provided with a first opening 2110. When viewed from the first direction X, the first opening 2110 may be separated from the second end edge 214. The first surface 210a of the first current collector 210 includes a first region 2100. The first region 2100 is configured as a region of the first surface 210a exposed at the first opening 2110. That is, the first region 2100 is exposed at the first opening 2110. In this case, the first direction X is also a direction perpendicular to the first region 2100.

In some embodiments, when viewed from the first direction X, the first region 2100 and the first opening 2110 may both be rectangular. The first opening 2110 includes a first opening edge 2111 and a second opening edge 2112 opposite each other in the second direction Y, and a third opening edge 2113 connected to both the first opening edge 2111 and the second opening edge 2112. In some embodiments, the first opening edge 2111 and the second opening edge 2112 can both extend along the third direction Z, and the third opening edge 2113 can extend along the second direction Y. The first opening edge 2111, the second opening edge 2112, and the third opening edge 2113 may all be linear.

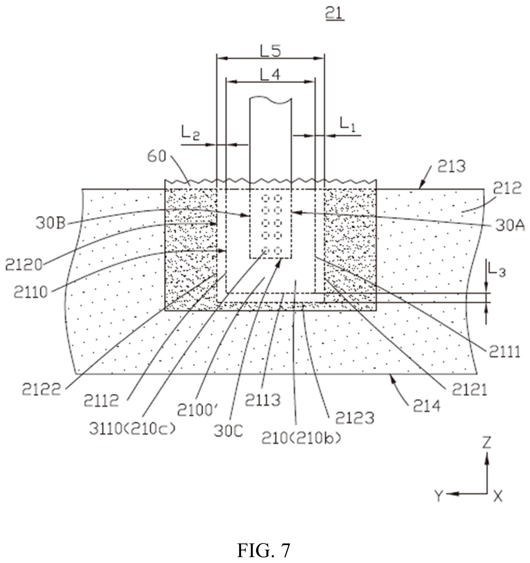

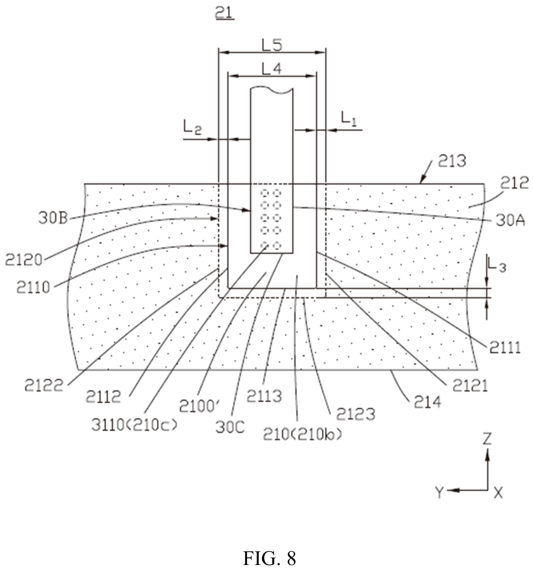

Referring to FIGs. 7 and 8, in some embodiments, the second conductive material layer 212 includes a second opening 2120. When viewed from the first direction X, the second opening 2120 may be separated from the second end edge 214. The second surface 210b of the first current collector 210 includes a second region 2100'. The second region 2100' is configured as a region of the second surface 210b exposed at the second opening 2120. That is, the second region 2100' is exposed at the second opening 2120.

In some embodiments, when viewed from the first direction X, the second region 2100' and the second opening 2120 may both be rectangular. The second opening 2120 includes a fourth opening edge 2121 and a fifth opening edge 2122 opposite each other in the second direction Y, and a sixth opening edge 2123 connected to both the fourth opening edge 2121 and the fifth opening edge 2122. In some embodiments, the fourth opening edge 2121 and the fifth opening edge 2122 can both extend along the third direction Z, and the sixth opening edge 2123 can extend along the second direction Y.

In some embodiments of this application, a foam adhesive can be pre-applied onto the first region 2100, and after an active material is applied, heating is performed to make the foam adhesive fall off, so that the first region 2100 is exposed; similar steps are performed such that the second region 2100' is exposed; and then the electrode plate is dried and calendered. Alternatively, after the active material is applied and dried, a laser cleaning method can be used to clean out the first opening 2110 in the first conductive material layer 211, so that the first region 2100 is exposed; similar steps are performed such that the second region 2100' is exposed; and then the electrode plate is calendered (the sequence of laser cleaning and calendering can be interchanged). Alternatively, after the active material is applied and dried, a scraper is directly used to scrap off the active material on the first region 2100, so that the first region 2100 is exposed; similar steps are performed such that the second region 2100' is exposed; and then the electrode plate is calendered. (the sequence of laser cleaning and calendering can be interchanged). It can be understood that after laser cleaning or scraping by the scraper, a small amount of active material may remain on the surface of the first region 2100 or the second region 2100'. This is not limited in this application. In some specific embodiments, for the positive electrode plate, when the current collector is an aluminum foil, since the aluminum foil is soft, the active material on the first region 2100 and the second region 2100' can be first removed using laser cleaning or the scraper, followed by calendering, thereby reducing the possibility that the active material is not easily removed completely and causes damage to the current collector when the active material is compacted during calendering first. For the negative electrode plate, the active material on the first region 2100 and the second region 2100' can also be removed first using laser cleaning or the scraper, followed by calendering, thereby reducing the possibility that the active material is not easily removed completely when the active material is compacted during calendering first.

As shown in FIGs. 5 to 8, when viewed from the first direction X, the first region 2100 has an overlapping portion with the second region 2100'. The first conductive plate 30 is connected to the first region 2100 or the second region 2100'. When viewed from the first direction X, the first conductive plate 30 has an overlapping portion with the first end edge 213 of the first electrode plate 21. As shown in FIGs. 5 and 6, in some embodiments, the first conductive plate 30 is connected to the first region 2100.

As shown in FIG. 3, in some embodiments, the first conductive plate 30 includes a first conductive region 31, a second conductive region 32, and a third conductive region 33. The first conductive region 31 is disposed in the body portion 11 and connected to the first region 2100. Thus, when viewed from the first direction X, the first conductive region 31 has an overlapping portion with the first region 2100. The first conductive region 31 includes a connection region 311 and an edge region 312 disposed around the connection region 311 (as shown in FIGs. 5 and 6), and the first conductive region 31 is connected to the first region 2100 through the connection region 311. The second conductive region 32 is disposed in the connection portion 12 and extends out of the housing 10, and the second conductive region 32 may be connected to an external device. The third conductive region 33 is disposed in the body portion 11, and the third conductive region 33 is connected to both the first conductive region 31 and the second conductive region 32. In some embodiments, the connection region 311 may be rectangular.

Furthermore, the third conductive region 33 can be divided into a first subregion 331 connected to the first conductive region 31 and a second subregion 332 connected to the second conductive region 32. The first subregion 331 can extend along the third direction Z from the first conductive region 31. A portion of the third conductive region 33 (such as the second subregion 332) can extend along a direction from the first region 2100 to the second region 2100', allowing the second subregion 332 to be bent relative to both the first subregion 331 and the second conductive region 32. The extension direction of the portion of the third conductive region 33 may be parallel to the first direction X or may be inclined relative to the first direction X. The portion of the third conductive region 33 extends along the direction from the first region 2100 to the second region 2100'. In this way, when the electrochemical device 100 is subjected to mechanical abuse such as drops and collisions by external forces and the electrode assembly 20 moves in the housing 10 to cause the first current collector 210 to pull the first conductive region 31, since the extension direction of the portion of the third conductive region 33 coincides with a force direction of the first conductive region 31, the third conductive region 33 can provide a large buffer space, reducing pulling on the connection region 311 of the first conductive region 31, thereby reducing the possibility of the first conductive plate 30 detaching from the first current collector 210 and leading to a decrease in the output voltage of the electrochemical device 100 or even incapability of charging and discharging, and improving the reliability and service life of the electrochemical device 100. When viewed from the first direction X, a virtual boundary line between the first subregion 331 and the first conductive region 31 overlaps with the first end edge 213, a virtual boundary line between the first subregion 331 and the second subregion 332 passes through a bent point between the first subregion 331 and the second subregion 332, and a virtual boundary line between the second subregion 332 and the second conductive region 32 passes through a bent point between the second subregion 332 and the second conductive region 32.

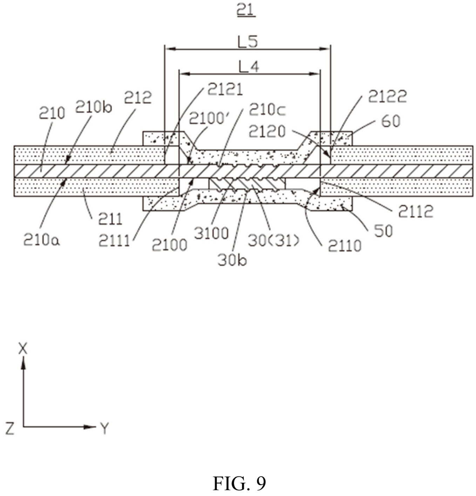

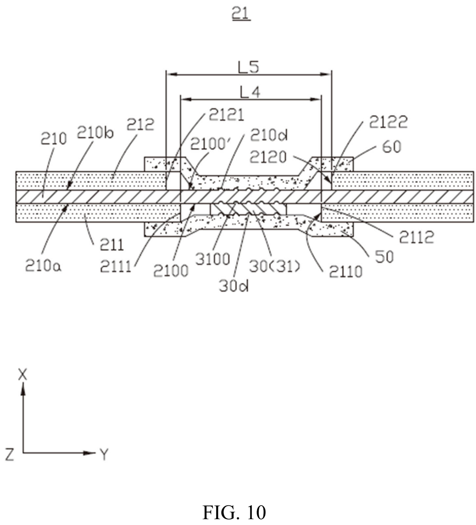

In some embodiments, the first conductive plate 30 can be welded to the first region 2100, thereby improving the connection strength between the first conductive plate 30 and the first region 2100. Referring to FIGs. 5 and 6; in some embodiments, at least one welding spot 3110 may be formed at a welding position (such as the connection region 311) between the first conductive plate 30 and the first region 2100. The connection region 311 and the first region 2100 are fixed to each other through the welding spot 3110. When viewed from the first direction X, a plurality of welding spots 3110 can be arranged in a matrix. In this case, the edge region 312 is a region located outside the outermost circle of the welding spots 3110 in the first connection region 311. Referring to FIG. 9, the welding spots 3110 may be a plurality of protrusions formed at the welding position between the first conductive plate 30 and the first region 2100, and the protrusions protrude from the first region 2100 to the first conductive plate 30. In addition, at least one protrusion 30b is correspondingly formed on a surface of the first conductive plate 30 facing away from the first region 2100. At least one depression 210c is correspondingly formed on the second surface 210b of the first current collector 210. The welding spot 3110, the protrusion 30b, and the depression 210c can be formed during the welding process (also referred to as welding marks). However, this is not limited in this application. Referring to FIG. 10, in some other embodiments, the welding spots 3110 may alternatively be a plurality of depressions at the welding position between the first conductive plate 30 and the first region 2100, and the depressions are recessed from the first region to the first conductive plate 30. In addition, at least one depression 30d is correspondingly formed on the surface of the first conductive plate 30 facing away from the first region 2100, and at least one protrusion 210d is correspondingly formed on the second surface 210b of the first current collector 210. The welding spot 3110, the depression 30d, and the protrusion 210d can be formed during the welding process (also referred to as welding marks). However, this is not limited in this application. In another embodiment, the first conductive plate 30 can also be connected to the first region 2100 through a conductive adhesive or another method.

In some embodiments, an area of connection region 311 is defined as $S_1$, an area of the first region 2100 is defined as $S_2$, and $S_1 < S_2$. Thus, this may reduce the possibility of increased welding difficulty when the connection region 311 is large. In some specific embodiments, $25\% \leq S_1/S_2 \leq 50\%$. Thus, this may improve the connection strength between the connection region 311 and the first region 2100, and further reduce the possibility of increased welding difficulty when the connection region 311 is large. The areas $S_1$ and $S_2$ can be respectively calculated based on the length of each edge of connection region 311 or the first region 2100 in combination with the specific shape of the connection region 311 or the first region 2100. When the area $S_2$ is used as an example, measurement steps include: disassembling the electrochemical device 100, taking the first electrode plate 21 as a test sample; and using a caliper or another suitable measuring tool to directly measure the values of the first opening edge 2111 (or the second opening edge 2112) and the third opening edge 2113, or capturing an image of the first electrode plate 21 and performing measurements in the image. Then, when the first region 2100 is rectangular, $S_2$ is the product of the values of the first opening edge 2111 and the third opening edge 2113.

In some embodiments, a sum of areas of projections of the plurality of welding spots 3110 in the connection region 311 in the first direction X is defined as $S_3$, where $S_3 < S_1$. Thus, this reduces the possibility of overwelding when the proportion of the area of the welding spot 3110 is large. In some specific embodiments, $25\% \leq S_3/S_1 \leq 80\%$. Thus, this further reduces the possibility of overwelding when the proportion of the area of the welding spot 3110 is large, also reduces the possibility of insufficient welding when the proportion of the area of the welding spot 3110 is small, improves the connection strength between the connection region 311 and the first region 2100, and reduces the possibility of the first conductive plate 30 falling off during mechanical abuse. $S_3$ can be measured using an image method. Test steps include: disassembling the electrochemical device 100, taking the first electrode plate 21 as a test sample, and capturing an image including the connection region 311 from the first direction X, where the image is a first image; capturing an image of a reference target with a known area of $S_0$, where the image is a second image; calculating the number ni of pixel points corresponding to the welding spot 3110 in the first image, and calculating the number $n_0$ of pixel points corresponding to the reference target in the second image; and calculating the area $S_3$ of the welding spot 3110 based on the area $A_0$, the number $n_1$, and the number $n_0$, where $S_3 = (S_0 \times n_0)/n_1$. It can be understood that the test of $S_3$ is not limited to the above method. In another embodiment, when the connection region 311 is connected to the first region 2100 through another method, $S_3$ can also be calculated based on the sizes of the dimensions of the connection region 311 in combination with the specific shape of the connection region 311.

As shown in FIGs. 5 to 8, a first side 30A of the first conductive plate 30 is defined as a position located on a side of the first conductive plate 30 in the second direction Y when viewed from the first direction X. A second side 30B of the first conductive plate 30 is defined as a position opposite the first side 30A and located on another side of the first conductive plate 30 in the second direction Y when viewed from the first direction X. A third side 30C of the first conductive plate 30 is defined as a position located on a side of the first conductive plate 30 in the second direction Y when viewed from the first direction X. A fourth side 30D of the first conductive plate 30 (shown in FIG. 1) is defined as a position opposite the third side 30C and located on another side of the first conductive plate 30 in the second direction Y when viewed from the first direction X. For example, the first side 30A of the first conductive plate 30 may refer to a left side of the first conductive plate 30, the second side 30B of the first conductive plate 30 may refer to a right side of the first conductive plate 30, the third side 30C of the first conductive plate 30 may refer to a lower side of the first conductive plate 30, and the fourth side 30D of the first conductive plate 30 may refer to an upper side of the first conductive plate 30. The third side 30C of the first conductive plate 30 is located in the housing 10, and the fourth side 30D is located outside the housing 10.

When viewed from the first direction X, the first opening edge 2111 and the fourth opening edge 2121 are located on the first side 30A of the first conductive plate 30, the second opening edge 2112 and the fifth opening edge 2122 are located on the second side 30B of the first conductive plate 30 opposite the first side 30A, and the third opening edge 2113 and the sixth opening edge 2123 are located on the third side 30C of the first conductive plate 30. When viewed from the first direction X, the first region 2100 does not completely overlap with the second region 2100'. For example, the first opening edge 2111 and the fourth opening edge 2121 are misaligned with each other in the second direction Y. Alternatively, the second opening edge 2112 and the fifth opening edge 2122 are misaligned with each other in the second direction Y. Alternatively, the third opening edge 2113 and the sixth opening edge 2123 are misaligned with each other in the third direction Z. When the first opening edge 2111 and the fourth opening edge 2121 are misaligned with each other in the second direction Y, the first electrode plate 21 has thickness transitions at positions corresponding to the first opening edge 2111 and the fourth opening edge 2121. When the second opening edge 2112 and the fifth opening edge 2122 are misaligned with each other in the second direction Y, the first electrode plate 21 has thickness transitions at positions corresponding to the second opening edge 2112 and the fifth opening edge 2122. When the third opening edge 2113 and the sixth opening edge 2123 are misaligned with each other in the third direction Z, the first electrode plate 21 has thickness transitions at positions corresponding to the third opening edge 2113 and the sixth opening edge 2123. A distance between the first opening edge 2111 and the fourth opening edge 2121 in the second direction Y is defined as a first distance $L_1$, a distance between the second opening edge 2112 and the fifth opening edge 2122 in the second direction Y is defined as a second distance $L_2$, and a distance between the third opening edge 2113 and the sixth opening edge 2123 in the third direction Z is defined as a third distance $L_3$. The electrochemical device 100 satisfies at least one of the following conditions: 0.2 mm$\leq L_1 \leq$4 mm; 2 mm$\leq L_2 \leq$4 mm; or 0.2 mm$\leq L_3 \leq$4 mm. These distances correspond to misalignment distances of the corresponding opening edges.

In some embodiments, the first electrode plate 21 has thickness transitions at positions corresponding to the first opening edge 2111 and the fourth opening edge 2121, positions corresponding to the second opening edge 2112 and the fifth opening edge 2122, and positions corresponding to the third opening edge 2113 and the sixth opening edge 2123. The electrochemical device 100 satisfies all of the following conditions: 0.2 mm$\leq L_1 \leq$4 mm; 2 mm$\leq L_2 \leq$4 mm; and 0.2 mm$\leq L_3 \leq$4 mm. The distances $L_1$ to $L_3$ can be measured using a direct measurement method. Test steps include: disassembling the electrochemical device 100 and taking the first electrode plate 21 as a test sample; and using a caliper or another suitable measuring tool to directly measure the values of the distances $L_1$ to $L_3$, or capturing an image of the first electrode plate 21 and performing measurements in the image.

In this application, the opening edges located on the same side of the first conductive plate 30 are misaligned with each other to form a thickness transition, and a misalignment distance is properly set. In this way, when the electrochemical device 100 is subjected to mechanical abuse and the electrode assembly 20 moves in the housing 10 to cause the first conductive plate 30 to pull the first current collector 210, the thickness transition may also reduce the possibility of tearing induced by sudden thickness changes near the exposed edges of the first current collector 210 may be reduced, thereby reducing the possibility of the first conductive plate 30 detaching from the first current collector 210 and leading to a decrease in the output voltage of the electrochemical device 100 or even incapability of charging and discharging. Therefore, the reliability and service life of the electrochemical device 100 are improved. Moreover, the thickness transition is conducive to providing a buffering effect during calendering of the electrode plate, and reducing the possibility of damage such as wrinkles caused by a sudden increase in pressure on the exposed first current collector 210 during calendering of the electrode plate (especially, when the positive electrode plate has a high compacted density, the positive electrode current collector is significantly calendered during a calendering process), thereby reducing the possibility of poor appearance or poor internal interface of the electrochemical device 100. In addition, this may also reduce the possibility of inconvenient connection of the first conductive plate 30 (for example, increased difficulty in welding the first conductive plate 30 and reduced welding yield) or the influence on the capacity of the electrochemical device 100 when the misalignment distance is large.

In some embodiments, when viewed from the first direction X, the second region 2100' covers the first region 2100. For example, when viewed from the first direction X, an area of the second region 2100' is larger than the area of the first region 2100, so that in the first direction X, a projection of the first region 2100 is completely located in a projection of the second region 2100'. When viewed from the first direction X, the first opening edge 2111 and the fourth opening edge 2121 are misaligned with each other in the second direction Y, the second opening edge 2112 and the fifth opening edge 2122 are misaligned with each other in the second direction Y, and the third opening edge 2113 and the sixth opening edge 2123 are misaligned with each other in the third direction Z. Alternatively, the second region 2100' can completely overlap with the first region 2100. Therefore, when the first conductive plate 30 is connected to the first region 2100, as viewed from the first direction X, welding marks (such as the depression 210c shown in FIG. 9 or the protrusion 210d shown in FIG. 10) can completely fall within a range of the second region 2100'. This reduces the possibility of the welding marks falling on the second conductive material layer 212 in a thickness transition region and leading to detachment of a conductive material and short circuits, thereby improving the reliability and service life of the electrochemical device 100. In addition, the thickness of a welding position is also reduced, thereby reducing the influence on the energy density of the electrochemical device 100.

Furthermore, when the second region 2100' covers the first region 2100, a distance between the first opening edge 2111 and the second opening edge 2112 in the second direction Y is defined as a fourth distance $L_4$, and a distance between the fourth opening edge 2121 and the fifth opening edge 2122 in the second direction Y is defined as a fifth distance $L_5$, where $L_4 < L_5$. Therefore, the first electrode plate 21 has thickness transitions at positions corresponding to the first opening edge 2111 and the fourth opening edge 2121, and/or the first electrode plate 21 has thickness transitions at positions corresponding to the second opening edge 2112 and the fifth opening edge 2122. This allows the thickness transition to reduce the possibility of damage to the first current collector 210 during calendering or mechanical abuse. Moreover, this also further reduces the possibility of the welding marks falling on the second conductive material layer 212 in the thickness transition region and leading to detachment of the conductive material and short circuits. In some embodiments, 0.8 mm$\leq L_5 - L_4 \leq$6 mm. Thus, this allows the thickness transition to provide a good buffering effect during calendering of the electrode plate, and also reduces the possibility of inconvenient connection of the first conductive plate 30 or the influence on the capacity of the electrochemical device 100 when the misalignment distance is large.

As shown in FIG. 5, in some embodiments, the electrochemical device 100 further includes a first layer 50 containing an insulating material. The first layer 50 is adhered to the first region 2100. The first conductive plate 30 is disposed between the first region 2100 and the first layer 50. The first layer 50 is used to cover the welding marks (such as the protrusion 30b) on the first conductive plate 30, thereby reducing the risk of the welding marks piercing the separator 23. The first layer 50 may be a single-sided adhesive or a double-sided adhesive, and a specific material of the first layer 50 may be at least one selected from polypropylene, polyethylene, polyvinylidene fluoride, vinylidene fluoride-hexafluoropropylene copolymer, polymethyl methacrylate, or polyethylene glycol. In another embodiment, the first layer 50 may alternatively be a ceramic coating.

In some embodiments, when viewed from the first direction X, the first layer 50 completely covers the first region 2100 and also covers a portion of the first conductive material layer 211 surrounding the first region 2100, thereby improving the adhesion strength of the first layer 50. Moreover, the first layer 50 extends beyond the first end edge 213 in the third direction Z. When viewed from the first direction X, the first layer 50 includes a first edge 51 and a second edge 52 opposite each other in the second direction Y, and a third edge 53 and a fourth edge 54 opposite each other in the third direction Z. The third edge 53 is connected to both the first edge 51 and the second edge 52, and the fourth edge 54 is connected to both the first edge 51 and the second edge 52. The first edge 51 and the second edge 52 may both extend along the third direction Z. The third edge 53 and the fourth edge 54 may both extend along the third direction Z. The first edge 51 is located on the first side 30A of the first conductive plate 30; and in the second direction Y, the first opening edge 2111 is located between the first edge 51 and the first conductive plate 30. The second edge 52 is located on the second side 30B of the first conductive plate 30; and in the second direction Y, the second opening edge 2112 is located between the second edge 52 and the first conductive plate 30. The third edge 53 is located on the third side 30C of the first conductive plate 30; and in the third direction Z, the third edge 53 is located between the third opening edge 2113 and the second end edge 214. The fourth edge 54 extends beyond the first end edge 213 in the third direction Z. Thus, the first layer 50 can also cover burrs formed at the first end edge 213 of the first current collector 210 during a cutting process, reducing the possibility of the burrs piercing the separator 23. When viewed from the first direction X, a distance between the first edge 51 and the first opening edge 2111 in the second direction Y is defined as a ninth distance $L_9$, a distance between the second edge 52 and the second opening edge 2112 in the second direction Y is defined as a tenth distance $L_{10}$, and a distance between the third edge 53 and the third opening edge 2113 in the third direction Z is defined as an eleventh distance $L_{11}$, where $0.5\,mm \leq L_9 \leq 8\,mm$, $0.5\,mm \leq L_{10} \leq 8\,mm$, and $0.5\,mm \leq L_{11} \leq 8\,mm$. Thus, this allows for strong adhesion of the first layer 50, reducing the possibility of detachment of the first layer 50. In addition, this also reduces the possibility of increased area of the first conductive material layer 211 covered by the first layer 50 (the portion of the first conductive material layer 211 cannot implement capacity utilization during charging and discharging) and reduced capacity of the electrochemical device 100 when the distance $L_9$, $L_{10}$, or $L_{11}$ is large.

As shown in FIG. 7, the electrochemical device 100 further includes a second layer 60 containing an insulating material. The second layer 60 is adhered to the second region 2100'. The second layer 60 is used to cover the welding marks (such as the protrusion 210d), reducing the risk of the welding marks piercing the separator 23. In some embodiments, the second layer 60 may be a single-sided adhesive, a double-sided adhesive, or a ceramic coating.

It can be understood that in some embodiments, when the thickness of the second current collector 220 of the second electrode plate 22 is relatively small (for example, less than 5 microns), the second electrode plate 22 may be provided with a structure similar to that of the first electrode plate 21. For example, the third conductive material layer 221 and the fourth conductive material layer 222 are respectively provided with openings, then the opening edges on the same side of the second conductive plate 40 are misaligned, and a misalignment range is properly set, thereby reducing the possibility of damage to the second current collector 220 during calendering or mechanical abuse of the electrode plate.

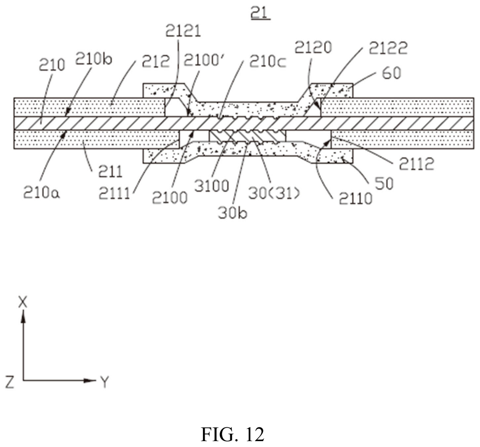

Referring to FIG. 12, another embodiment of this application further provides an electrochemical device (not shown in the figure). In the electrochemical device, the first opening edge 2111 and the fourth opening edge 2121 are misaligned with each other in the second direction Y, and the second opening edge 2112 and the fifth opening edge 2122 are misaligned with each other in the second direction Y. However, the electrochemical device is different from the foregoing electrochemical device 100 in that the second region 2100' only covers a portion of the first region 2100, and the first region 2100 only covers a portion of the second region 2100'. A distance between the first opening edge 2111 and the fourth opening edge 2121 in the second direction Y is defined as a first distance $L_1$, a distance between the second opening edge 2112 and the fifth opening edge 2122 in the second direction Y is defined as a second distance $L_2$, and a distance between the third opening edge 2113 and the sixth opening edge 2123 in the third direction Z is defined as a third distance $L_3$. The electrochemical device 100 satisfies at least one of the following conditions: $0.2\,mm \leq L_1 \leq 4\,mm$; $2\,mm \leq L_2 \leq 4\,mm$; or $0.2\,mm \leq L_3 \leq 4\,mm$. In this case, the opening edges located on the same side of the first conductive plate 30 are also misaligned with each other to form a thickness transition, and a misalignment distance is properly set. This allows the thickness transition to reduce the possibility of damage to the first current collector 210 during calendering or mechanical abuse. In addition, this may also reduce the possibility of inconvenient connection of the first conductive plate 30 or the influence on the capacity of the electrochemical device when the misalignment distance is large.

In this embodiment, setting $25\% \leq S_1/S_2 \leq 50\%$ may also reduce the possibility of the connection region 311 overlapping with the thickness transition region when the proportion of the area of the connection region 311 is large.

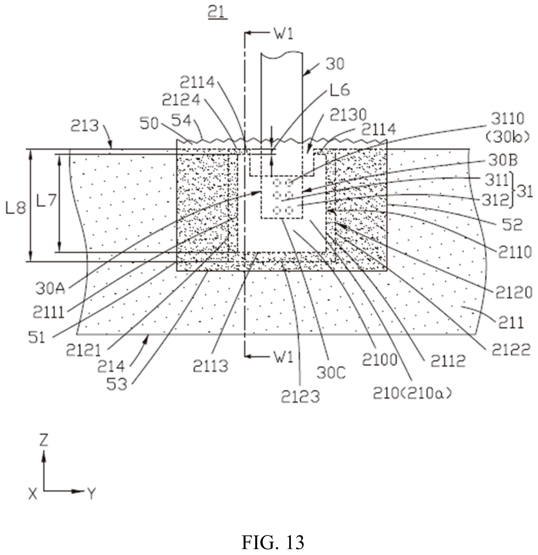

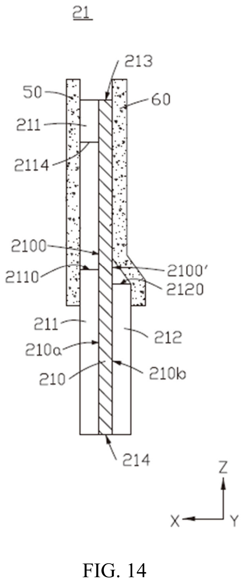

Referring to FIGs. 13 and 14, a still another embodiment of this application further provides an electrochemical device (not shown in the figure). The electrochemical device is different from the above electrochemical device 100 in that the first electrode plate 21 is provided with a recess 2130 at the first end edge 213. The recess 2130 can be formed by cutting through a laser cutting method or a die cutting method. When viewed from the first direction X, the recess 2130 connects to the first region 2100, and the first conductive plate 30 covers a portion of the recess 2130. In some embodiments, when viewed from the first direction X, the third conductive region 33 of the first conductive plate 30 covers a portion of the recess 2130. When viewed from the third direction Z, the first region 2100 has an overlapping portion with the recess 2130.

When viewed from the first direction X, the first opening 2110 further includes a seventh opening edge 2114. The seventh opening edge 2114 connects the first opening edge 2111 and the recess 2130, and the seventh opening edge 2114 also connects the second opening edge 2112 and the recess 2130. A portion of the first conductive material layer 211 is located between the seventh opening edge 2114 and the first end edge 213. Due to the recess 2110, the thickness of the first electrode plate 21 at this position is reduced, and the portion of the first conductive material layer 211 located between the seventh opening edge 2114 and the first end edge 213 can act as a thickness compensation, thereby making the overall thickness of the electrochemical device 100 more uniform. Moreover, when the first layer 50 is provided, the presence of the first extension region 2112 and the second extension region 2113 can also increase a contact area between the first layer 50 and the first conductive material layer 211, reducing the risk of the first layer 50 having wrinkles. In addition, typically, a preparation process of the electrode plate further includes an electrode plate slitting procedure. In this application, the recess 2130 is provided and a portion of the first conductive material layer 211 is located between the seventh opening edge 2114 and the first end edge 213, so when the electrode plate is slit (the electrode plate is cut along the second direction Y), the thickness at the slit edge is uniform, which is conducive to reducing the possibility of formation of wavy edges at the slit edge.

When viewed from the first direction X, the second opening 2120 further includes an eighth opening edge 2124. The eighth opening edge 2124 connects the fourth opening edge 2121, and the eighth opening edge 2124 also connects the fifth opening edge 2122 and the recess 2130. When viewed from the first direction X, the eighth opening edge 2124 overlaps with the first end edge 213. In this case, there is no second conductive material layer 212 between the eighth opening edge 2124 and the first end edge 213. It can be understood that to further reduce the possibility of formation of wavy edges at the slit edge, a portion of the second conductive material layer 212 may be present at the slit edge before the electrode plate is cut, and the portion of the second conductive material layer 212 is removed after the electrode plate is cut.

In some embodiments, when viewed from the first direction X, the seventh opening edge 2114 and the eighth opening edge 2124 are misaligned with each other in the third direction Z, allowing the first electrode plate 21 to have thickness transitions at both positions corresponding to the seventh opening edge 2114 and the eighth opening edge 2124. When viewed from the first direction X, a distance between the seventh opening edge 2114 and the eighth opening edge 2124 in the third direction Z is a sixth distance $L_6$, where $0.2 \text{ mm} \leq L_6 \leq 4 \text{ mm}$. The seventh opening edge 2114 and the eighth opening edge 2124 are arranged to be misaligned with each other to form a thickness transition, and a misalignment range is properly set. This allows the thickness transition to also reduce the possibility of damage to the first current collector 210 during calendering or mechanical abuse. In addition, this may also reduce the possibility of inconvenient connection of the first conductive plate 30 or the influence on the capacity of the electrochemical device when the misalignment range is large.

In some embodiments, a distance between the third opening edge 2113 and the seventh opening edge 2114 in the third direction Z is a seventh distance $L_7$, and a distance between the sixth opening edge 2123 and the eighth opening edge 2124 in the third direction Z is an eighth distance $L_8$, where $L_7 < L_8$. Thus, the first electrode plate 21 also has thickness transitions at positions corresponding to the seventh opening edge 2114 and the eighth opening edge 2124 and/or positions corresponding to the third opening edge 2113 and the eighth opening edge 2124. In some specific embodiments, $0.8 \text{ mm} \leq L_8 - L_7 \leq 6 \text{ mm}$. Properly setting the misalignment range allows the thickness transition to also reduce the possibility of damage to the first current collector 210 during calendering or mechanical abuse. In addition, this may also reduce the possibility of inconvenient connection of the first conductive plate 30 or the influence on the capacity of the electrochemical device when the misalignment range is large.

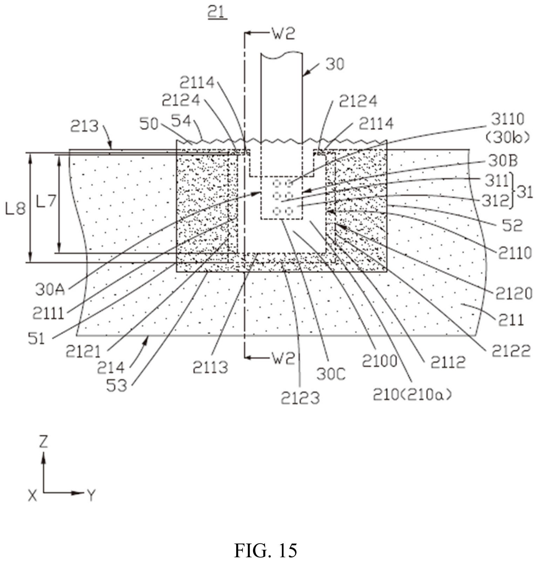

Referring to FIGs. 14 and 15, in some other embodiments, when viewed from the first direction X, the eighth opening edge 2124 is separated from the first end edge 213 in the third direction Z. A portion of the second conductive material layer 212 is disposed between the eighth opening edge 2124 and the first end edge 213. A distance between the third opening edge 2113 and the seventh opening edge 2114 in the third direction Z is a seventh distance $L_7$, and a distance between the sixth opening edge 2123 and the eighth opening edge 2124 in the third direction Z is an eighth distance $L_8$, where $L_7 < L_8$. Thus, the first electrode plate 21 also has thickness transitions at positions corresponding to the seventh opening edge 2114 and the eighth opening edge 2124 and/or positions corresponding to the third opening edge 2113 and the sixth opening edge 2123. In this case, in some specific embodiments, $0.4 \text{ mm} \leq L_8 - L_7 \leq 6 \text{ mm}$. Properly setting the misalignment range allows the thickness transition to also reduce the possibility of damage to the first current collector 210 during calendering or mechanical abuse. In addition, this may also reduce the possibility of inconvenient connection of the first conductive plate 30 or the influence on the capacity of the electrochemical device when the misalignment range is large.

The electrochemical device (such as the electrochemical device 100) of this application includes all devices capable of undergoing electrochemical reactions. Specifically, the electrochemical device includes all kinds of primary batteries, secondary batteries, fuel batteries, solar batteries, and capacitors (for example, super capacitors). Optionally, the electrochemical device may be a lithium secondary battery including a lithium metal secondary battery, a lithium-ion secondary battery, a lithium polymer secondary battery, and a lithium-ion polymer secondary battery.

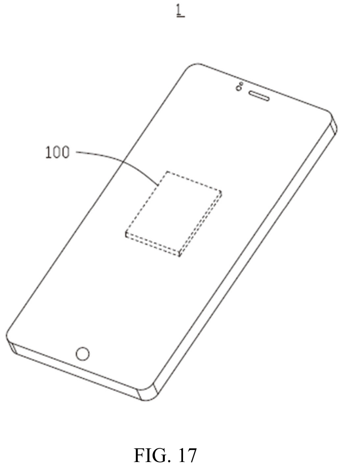

Referring to FIG. 17, an embodiment of this application further provides an electronic device 1. The electronic device 1 includes an electrochemical device (such as the electrochemical device 100). The electronic device 1 is powered by the above electrochemical device 100, and the electrochemical device 100 has high reliability and long service life. The electrochemical device 100 of this application is applicable to electronic devices 1 in various fields. In an embodiment, the electronic device 1 of this application may be but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a timepiece, an electric tool, a flash lamp, a camera, a large household battery, or a lithium-ion capacitor.

Specific examples and comparative examples below are used to describe this application in detail. The electrochemical device being a lithium-ion soft pack battery is used as an example to describe this application with reference to specific test methods.

Examples 1 to 6

(1) Preparation of first electrode plate 21 (positive electrode plate): A positive electrode active material lithium cobalt oxide ($LiCoO_2$), conductive carbon black (Super P), and polyvinylidene fluoride (PVDF) were mixed at a weight ratio of 97.5:1.0:1.5, then N-methylpyrrolidone (NMP) was added as a solvent to prepare a slurry with a solid content of 75wt%; and the slurry was stirred to uniformity. A foam adhesive was pre-applied onto a first region 2100, the slurry was uniformly applied onto one surface of a positive electrode current collector aluminum foil with a thickness of 12 $\mu$m, and heating was performed to make the foam adhesive fall off, so that the first region 2100 was exposed (the size $L_4$ of the first region 2100 in a second direction Y was 10 mm, and the size of the first region 2100 in a third direction Z was 30 mm). Then, drying was performed at 90°C to obtain a positive electrode plate having a positive electrode active material layer with a thickness of 100 $\mu$m. On another surface of the positive electrode current collector aluminum foil, a foam adhesive was pre-applied onto a second region 2100', the slurry was uniformly applied onto the surface, and heating was performed to make the foam adhesive fall off, so that the second region 2100' was exposed. Values of $L_1$, $L_2$, and $L_3$ were specifically referred to Table 1. Then, drying was performed at 90°C to obtain a positive electrode plate coated with positive electrode active material layers on both surfaces. Then, a first conductive plate 30 was welded to the first region 2100.

(2) Preparation of second electrode plate 22 (negative electrode plate): A negative electrode active material artificial graphite, conductive carbon black (Super P), and styrene-butadiene rubber (SBR) were mixed at a weight ratio of 96:1.5:2.5, and deionized water was added as a solvent to prepare a slurry with a weight percentage of 70wt%; and the slurry was stirred to uniformity. The slurry was uniformly applied onto one surface of a negative electrode current collector copper foil with a thickness of 10 $\mu$m; and drying was performed at 110°C to obtain a negative electrode plate coated with a negative electrode active material layer on one surface, where a coating thickness was 150 $\mu$m. The above steps were repeated on another surface of the negative electrode plate to obtain a negative electrode plate coated with negative electrode active material layers on both surfaces, where a conductive material layer of the second electrode plate 22 was provided with an opening to expose a corresponding region of a current collector 220, and the structure of the opening could be conventionally designed. Then, a second conductive plate 40 was welded to the region where the current collector 220 is exposed.

(3) Preparation of electrolyte: In a dry argon atmosphere, organic solvents ethylene carbonate (EC), ethyl methyl carbonate (EMC), and diethyl carbonate (DEC) were mixed first at a mass ratio of EC:EMC:DEC=30:50:20, and then a lithium salt lithium hexafluorophosphate ($LiPF_6$) was added into the organic solvents and then dissolved. The resulting solution was mixed to uniformity, to obtain an electrolyte with the lithium salt at a concentration of 1.15 mol/L.

(4) Preparation of battery: The first electrode plate 21, a separator 23, and the second electrode plate 22 were stacked sequentially and then wound to form an electrode assembly 20, where a polyethylene (PE) film with a thickness of 15 $\mu$m was used as the separator 23. Then, electrolyte injection, formation, and packaging were performed to prepare a battery with dimensions of 4.46 mm×64.28 mm×82.50 mm, a weight of 55.7 g, and a capacity of 3920 mAh. A cut-off voltage of the battery was 3.0-4.43 V.

Examples 1 to 14 were different from each other in the values of $L_1$, $L_2$, and $L_3$ or the ratio of $S_1/S_2$. For details, refer to Table 1.

Comparative example 1

This comparative example was different from Example 1 in the values of $L_1$, $L_2$, and $L_3$.

Comparative example 3

This comparative example was different from Example 1 in that when viewed from the first direction X, the first region 2100 completely overlapped with the second region 2100'.

10 batteries of each example and comparative example were respectively subjected to drop test. Specific steps of the drop test included: (1) Under environmental conditions with a temperature of 15-25°C, a relative humidity of 35-70%, and an atmospheric pressure of 101325 kPa, the open-circuit voltage and internal resistance of each battery were recorded (a testing instrument was a voltage and resistance tester, manufacturer: Dongguan Lijia Precision Instruments Co., Ltd., model: LNG-SY1-0020-DQ). (2) Then, the battery was charged to 4.43 V at a constant current of 0.7C, and then charged at constant voltage until the current dropped to 0.025C. (3) The battery was placed in a fixture chamber, a drop height was changed to 1 m, and an automated drop device was used to sequentially drop the fixture chamber with the battery from a position at a height of 1 m to a cement floor, where the drops were performed in a sequence of the bottom surface, left side surface, right side surface, back surface, front surface, and top surface of the fixture chamber, constituting one round; and one cycle included a total of 5 rounds, in other words, a total of 30 drops were performed in one cycle. (4) The voltage of the battery was tested after each round of drops, and the drops ended if the battery undergone fires or electrolyte leakage, otherwise the drops continued until 5 rounds of drops were completed. (5) The voltage and internal resistance of the battery were recorded; and if the voltage drop was less than 50 mV, the battery was considered to have passed the drop test. The results are recorded in Table 1.

**Table 1**

|  | $L_1$ (mm) | $L_2$ (mm) | $L_3$ (mm) | $S_1/S_2$ | Capacity (mAh) | Drop test pass rate |
|---|---|---|---|---|---|---|
| Example 1 | 0.2 | 0.2 | 0.2 | 40% | 3920 | 5/10 |
| Example 2 | 0.5 | 0.5 | 0.5 | 40% | 3920 | 7/10 |
| Example 3 | 1 | 1 | 1 | 40% | 3920 | 10/10 |
| Example 4 | 2 | 2 | 2 | 40% | 3920 | 10/10 |
| Example 5 | 3 | 3 | 3 | 40% | 3920 | 10/10 |
| Example 6 | 4 | 4 | 4 | 40% | 3920 | 10/10 |
| Example 7 | 0 | 2 | 1 | 40% | 3920 | 8/10 |
| Example 8 | 1 | 1 | 0 | 40% | 3920 | 8/10 |
| Example 9 | 1 | 1 | 1 | 15% | 3920 | 5/10 |
| Example 10 | 1 | 1 | 1 | 25% | 3920 | 8/10 |
| Example 11 | 1 | 1 | 1 | 35% | 3920 | 9/10 |
| Example 12 | 1 | 1 | 1 | 50% | 3920 | 10/10 |
| Example 13 | 1 | 1 | 1 | 60% | 3920 | 10/10 |
| Example 14 | 5 | 5 | 5 | 40% | 3890 | 10/10 |
| Comparative example 1 | 0.1 | 0.1 | 0.1 | 40% | 3920 | 2/10 |
| Comparative example 3 | 0 | 0 | 0 | 40% | 3920 | 1/10 |
| Note: The drop test pass rate X/10 means that the number of the batteries passing the drop test in 10 tested samples is X. | | | | | | |

From the data in Table 1, it can be seen that as compared with Comparative examples 1 and 3, in Examples 1 to 8, the opening edges located on the same side of the first conductive plate 30 are misaligned with each other to form a thickness transition, and a misalignment distance is properly set. Therefore, the possibility of damage to the current collector during calendering or dropping can be reduced, and the battery has a high pass rate in the drop test. As compared with Example 1, in Example 9, $S_1/S_2$ is small and does not satisfy $25\% \leq S_1/S_2 \leq 50\%$. Therefore, the connection strength between the first conductive plate 30 and the first region 2100 is reduced, and the drop test pass rate is relatively reduced.

In Example 9, $S_1/S_2$ satisfies $35\% \leq S_1/S_2 \leq 50\%$, and the drop test pass rate is relatively high. In Example 14, due to the large values of $L_1$, $L_2$, and $L_3$, the battery capacity is reduced. In Examples 1 to 13, the battery safety is high, and the battery capacity is high.

In conclusion, it should be noted that the foregoing embodiments are merely intended to describe the technical solutions of this application, but not intended to constitute any limitation. Although this application is described in detail with reference to preferred embodiments, persons of ordinary skill in the art should understand that modifications or equivalent replacements can be made to the technical solutions of this application, without departing from the spirit and scope of the technical solutions of this application.

**Claims**

1. An electrochemical device, comprising a housing, an electrode assembly, and a first conductive plate, wherein the electrode assembly is located in the housing and comprises a first electrode plate; the first electrode plate comprises a first current collector, a first conductive material layer, and a second conductive material layer; the first current collector comprises a first surface and a second surface facing opposite directions; the first conductive material layer is disposed on the first surface; and the second conductive material layer is disposed on the second surface; wherein

   the first conductive material layer is provided with a first opening; the first surface comprises a first region; the first region is a region of the first surface exposed at the first opening; the second conductive material layer is provided with a second opening; the second surface comprises a second region; the second region is a region of the second surface exposed at the second opening; when viewed from a first direction perpendicular to the first region, the first region has an overlapping portion with the second region; and the first conductive plate is connected to the first region or the second region and extends out of the housing;

   when viewed from the first direction, the first opening comprises a first opening edge and a second opening edge opposite each other in a second direction perpendicular to the first direction, and a third opening edge connected to both the first opening edge and the second opening edge; when viewed from the first direction, the second opening comprises a fourth opening edge and a fifth opening edge opposite each other in the second direction, and a sixth opening edge connected to both the fourth opening edge and the fifth opening edge; and when viewed from the first direction, the first opening edge and the fourth opening edge are located on a first side of the first conductive plate, the second opening edge and the fifth opening edge are located on a second side of the first conductive plate opposite the first side, and the third opening edge and the sixth opening edge are located on a third side of the first conductive plate; and

   a distance between the first opening edge and the fourth opening edge in the second direction is a first distance; a distance between the second opening edge and the fifth opening edge in the second direction is a second distance; and a distance between the third opening edge and the sixth opening edge in a third direction perpendicular to both the first direction and the second direction is a third distance; and the electrochemical device satisfies at least one of the following conditions:

$$0.2 \text{ mm} \leq \text{first distance};$$

$$0.2 \text{ mm} \leq \text{second distance};$$

   or

$$0.2 \text{ mm} \leq \text{third distance}.$$

2. The electrochemical device according to claim 1, wherein the electrochemical device satisfies one of the following conditions:

$$0.2 \text{ mm} \leq \text{first distance} \leq 4 \text{ mm};$$

$$0.2 \text{ mm} \leq \text{second distance} \leq 4 \text{ mm};$$

   or

0.2 mm≤third distance≤4 mm.

3. The electrochemical device according to claim 1, wherein the electrochemical device satisfies one of the following conditions:

0.5 mm≤first distance≤3 mm, 0.5 mm≤second distance≤3 mm, and 0.5 mm≤third distance≤3 mm;
0.5 mm≤first distance≤2 mm, 0.5 mm≤second distance≤2 mm, and 0.5 mm≤third distance≤2 mm; or
1 mm≤first distance≤2 mm, 1 mm≤second distance≤2 mm, and 1 mm≤third distance≤2 mm.

4. The electrochemical device according to claim 1, wherein when viewed from the first direction, the second region covers the first region.

5. The electrochemical device according to claim 4, wherein a distance between the first opening edge and the second opening edge in the second direction is a fourth distance; a distance between the fourth opening edge and the fifth opening edge in the second direction is a fifth distance; and the fourth distance is less than the fifth distance.

6. The electrochemical device according to claim 5, wherein 0.8 mm≤fifth distance-fourth distance≤6 mm.

7. The electrochemical device according to claim 1, wherein when viewed from the first direction, the first electrode plate comprises a first end edge and a second end edge opposite each other in the third direction, and the first electrode plate is provided with a recess at the first end edge; and when viewed from the first direction, the recess connects to the first region, and the first conductive plate covers a portion of the recess.

8. The electrochemical device according to claim 7, wherein when viewed from the first direction, the first opening further comprises a seventh opening edge connecting the first opening edge and the recess, the seventh opening edge also connects the second opening edge and the recess, and a portion of the first conductive material layer is located between the seventh opening edge and the first end edge; and when viewed from the first direction, the second opening further comprises an eighth opening edge connecting the fourth opening edge and the recess, the eighth opening edge also connects the fifth opening edge and the recess, and the eighth opening edge overlaps with the first end edge.

9. The electrochemical device according to claim 8, wherein when viewed from the first direction, a distance between the seventh opening edge and the eighth opening edge in the third direction is a sixth distance, and 0.2 mm≤sixth distance≤4 mm.

10. The electrochemical device according to claim 8, wherein a distance between the third opening edge and the seventh opening edge in the third direction is a seventh distance, a distance between the sixth opening edge and the eighth opening edge in the third direction is an eighth distance, and the seventh distance is less than the eighth distance.

11. The electrochemical device according to claim 10, wherein 0.8 mm≤eighth distance-seventh distance≤6 mm.

12. The electrochemical device according to claim 7, wherein when viewed from the first direction, the first opening further comprises a seventh opening edge connecting the first opening edge and the recess, the seventh opening edge also connects the second opening edge and the recess, and a portion of the first conductive material layer is located between the seventh opening edge and the first end edge; and when viewed from the first direction, the second opening further comprises an eighth opening edge connecting the fourth opening edge and the recess, the eighth opening edge also connects the fifth opening edge and the recess, and a portion of the second conductive material layer is disposed between the eighth opening edge and the first end edge.

13. The electrochemical device according to claim 12, wherein a distance between the third opening edge and the seventh opening edge in the third direction is a seventh distance, a distance between the sixth opening edge and the eighth opening edge in the third direction is an eighth distance, and the seventh distance is less than the eighth distance.

14. The electrochemical device according to claim 13, wherein 0.4 mm≤eighth distance-seventh distance≤6 mm.

15. The electrochemical device according to claim 4, wherein the first conductive plate is connected to the first region.

16. The electrochemical device according to claim 15, wherein the first conductive plate comprises a first conductive region having an overlapping portion with the first region when viewed from the first direction; the first conductive region comprises a connection region; and the first conductive region is connected to the first region through the connection region.

17. The electrochemical device according to claim 16, wherein an area of the connection region is $S_1$, an area of the first region is $S_2$, and $S_1 < S_2$.

18. The electrochemical device according to claim 17, wherein $25\% \leq S_1/S_2 \leq 50\%$.

19. The electrochemical device according to claim 18, wherein $35\% \leq S_1/S_2 \leq 50\%$.

20. The electrochemical device according to claim 16, wherein an area of the connection region is $S_1$; the connection region comprises a plurality of welding spots; a sum of areas of projections of the plurality of welding spots in the first direction is $S_3$; and $S_3 < S_1$.

21. The electrochemical device according to claim 20, wherein $25\% \leq S_3/S_1 \leq 80\%$.

22. The electrochemical device according to claim 16, wherein the housing comprises a body portion and a connection portion connected to the body portion; the electrode assembly is disposed in the body portion; the first conductive plate further comprises a second conductive region and a third conductive region connected to both the first conductive region and the second conductive region; the second conductive region is disposed in the connection portion and extends out of the housing; and a portion of the third conductive region extends along a direction from the first region to the second region.

23. The electrochemical device according to claim 15, wherein the first conductive plate is welded to the first region.

24. The electrochemical device according to claim 1, wherein the electrochemical device further comprises a first layer containing an insulating material; the first layer is adhered to the first region; and the first conductive plate is disposed between the first region and the first layer.

25. The electrochemical device according to claim 24, wherein when viewed from the first direction, the first layer covers the first region.

26. The electrochemical device according to claim 24, wherein the first layer comprises a first edge and a second edge opposite each other in the second direction, and a third edge connecting the first edge and the second edge; the first edge is located on the first side of the first conductive plate; the second edge is located on the second side of the first conductive plate; the third edge is located on the third side of the first conductive plate; and when viewed from the first direction, a distance between the first edge and the first opening edge in the second direction is a ninth distance, a distance between the second edge and the second opening edge in the second direction is a tenth distance, and a distance between the third edge and the third opening edge in the third direction is an eleventh distance, wherein 0.5 mm≤ninth distance≤8 mm, 0.5 mm≤tenth distance≤8 mm, and 0.5 mm≤eleventh distance≤8 mm.

27. The electrochemical device according to claim 1, wherein the electrode assembly is of a wound structure.

28. The electrochemical device according to claim 1, wherein the first electrode plate is a positive electrode plate, and the first current collector is an aluminum foil.

29. An electronic device, comprising the electrochemical device according to any one of claims 1 to 28.

FIG. 1

FIG. 2

FIG. 3

FIG. 4

FIG. 5

FIG. 6

FIG. 7

FIG. 8

FIG. 9

21

FIG. 10

FIG. 11

FIG. 12

FIG. 13

FIG. 14

FIG. 15

FIG. 16

FIG. 17

## INTERNATIONAL SEARCH REPORT

| International application No. |
| --- |
| **PCT/CN2022/143811** |

| A. | CLASSIFICATION OF SUBJECT MATTER |
| --- | --- |

H01M50/531(2021.01)i; H01M4/13(2010.01)i; H01M10/0525(2010.01)i

According to International Patent Classification (IPC) or to both national classification and IPC

| B. | FIELDS SEARCHED |
| --- | --- |

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS, CNTXT, WPABS, VEN, ENTXT, CNKI: 电池, 极片, 集流体, 凹槽, 极耳, 焊接, 胶纸, 开口, battery, current collector, groove, lead, weld, adhesive paper, opening

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 214589165 U (ZHUHAI COSMX BATTERY CO., LTD.) 02 November 2021 (2021-11-02)<br>description, paragraphs 23-98, and figures 1-6 | 1-6, 15-29 |
| Y | CN 214589165 U (ZHUHAI COSMX BATTERY CO., LTD.) 02 November 2021 (2021-11-02)<br>description, paragraphs 23-98, and figures 1-6 | 7-14 |
| Y | CN 114094044 A (ZHUHAI COSMX BATTERY CO., LTD.) 25 February 2022 (2022-02-25)<br>description, paragraphs 37-103, and figures 1-8 | 7-14 |
| X | CN 115332480 A (NINGDE AMPEREX TECHNOLOGY LTD.) 11 November 2022 (2022-11-11)<br>description, paragraphs 22-51, and figures 1-12 | 1-6, 15-29 |
| Y | CN 115332480 A (NINGDE AMPEREX TECHNOLOGY LTD.) 11 November 2022 (2022-11-11)<br>description, paragraphs 22-51, and figures 1-12 | 7-14 |
| A | KR 20070097152 A (SAMSUNG SDI CO., LTD.) 04 October 2007 (2007-10-04)<br>entire document | 1-29 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 September 2023** | **18 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 214589165 | U | 02 November 2021 | None | | | |
| CN | 114094044 | A | 25 February 2022 | CN | 216288522 | U | 12 April 2022 |
| | | | | WO | 2023088428 | A1 | 25 May 2023 |
| CN | 115332480 | A | 11 November 2022 | CN | 115332480 | B | 24 March 2023 |
| KR | 20070097152 | A | 04 October 2007 | KR | 101254884 | B1 | 15 April 2013 |

Form PCT/ISA/210 (patent family annex) (July 2022)